(19) Europäisches Patentamt
European Patent Office
Office européen des brevets

(11) **EP 3 001 370 A1**

(12) **EUROPEAN PATENT APPLICATION**

(43) Date of publication:
**30.03.2016 Bulletin 2016/13**

(51) Int Cl.:
***G06Q 10/10*** (2012.01)   ***G06F 17/27*** (2006.01)

(21) Application number: **14306512.6**

(22) Date of filing: **29.09.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Eluard, Marc
35576 Cesson-Sévigné (FR)**

• **Maetz, Yves
35576 Cesson-Sévigné (FR)**
• **Longet, Aurélien
35576 Cesson-Sévigné (FR)**

(74) Representative: **Huchet, Anne
Technicolor
1-5 rue Jeanne d'Arc
92130 Issy-Les-Moulineaux (FR)**

(54) **Method and system for consistency checking**

(57) Representations based on polygons are utilized to convey comparison information between elements to a user. Placement polygons are constructed based on a number of elements to be analyzed. A portion of the polygon is used to represent an element. Smaller shapes representing consistency indicators placed on the placement polygon are used to represent comparison information of an element with other elements. Additionally, color or grayscale can be applied to the indicators to convey comparison information to a user. The representations are scalable to any number of elements.

*FIG. 19*

EP 3 001 370 A1

**Description**

BACKGROUND

Screenwriting is often a collaborative effort in the movie industry. In order to make the most efficient use of expertise and the best use of time, a storyline is typically shared among a group of writers. Each writer separately creates a part of the story assigned to them with the hopes that it will be cohesive once the parts are recombined. However, problems arise when the writers become isolated either because of distance or because of lack of communication. Facts often become distorted or changed as the storyline sections begin to drift from their original intent - which happens often as creative efforts flow into different directions. This can be circumvented by frequent reviews of the individual works by a fact reviewer or editor in charge of maintaining consistency.

But, as the storyline grows in size and complexity, this becomes more and more time consuming and can interrupt the ongoing efforts of the individual writers as they submit their sections for review and wait for feedback. In addition, as the complexity of the storyline increases, so does the complexity of checking for consistencies and interpreting corrections. Individual writers also may not have a feel for how consistent they are compared to the other writers. The editor may not be able to step back and tell if the inconsistencies are mainly in the characters, the storyline, the titles and/or the settings of the different sections, especially in large projects. This reduces the overall managing effect because there is a lack of trend information that may help in eliminating consistency errors before they occur. Many products are available to assist with screenwriting such as storyboarding or outlining of material, but they lack the ability to automatically and easily relay consistency information.

SUMMARY

Consistency graphing techniques assist story writers using screenwriting tools to generate multiple consistent story documents. The techniques easily relay comparison information to facilitate with the creation step of a story, resulting into a movie screenplay (e.g., movie script), a book, a stage play, a game scenario and/or any other forms of a story. It allows better sharing and communication of the results to enhance the end product, both in quality and efficiency (e.g., time, cost, etc.). The techniques can be used to illustrate comparisons between a number of documents, through a textual analysis and a dedicated graphical representation and is easily adaptable/scalable to any number of documents or elements. The techniques are also applicable to other forms besides textual documents. They can be applied, for example, to musical compositions and the like as well.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings.

BRIEF DESCRIPTION OF THE DRAWINGS

FIG. 1 is a typical a story consistency checking flow in accordance with an embodiment of the present principles.
FIG. 2 is an example of performing consistency checks on a set of five documents in accordance with an embodiment of the present principles.
FIG. 3 is an example of a placement figure in accordance with an embodiment of the present principles.
FIG. 4 is a single element polygon (consistency polygon) graphical representation in accordance with an embodiment of the present principles.
FIG. 5 is a five consistency polygon graphical representation in accordance with an embodiment of the present principles.
FIG. 6 is an example of a portion of an analyzed element offset in a consistency polygon in accordance with an embodiment of the present principles.
FIG. 7 is an example of a portion of an analyzed element within a consistency polygon in accordance with an embodiment of the present principles.

FIG. 8 is an example of an element portion of a consistency polygon being represented by color in accordance with an embodiment of the present principles.

FIG. 9 is an example of an element portion of a consistency polygon being represented by grayscale in accordance with an embodiment of the present principles.

FIG. 10 is an example of close consistency polygons in accordance with an embodiment of the present principles.

FIG. 11 is an example of distant consistency polygons in accordance with an embodiment of the present principles..

FIG. 12 is an example of a vertex based graphical representation in accordance with an embodiment of the present principles.

FIG. 13 is an example of a segment based graphical representation in accordance with an embodiment of the present principles.

FIG. 14 is a before example of an applied filter in accordance with an embodiment of the present principles.

FIG. 15 is an after example of an applied filter in accordance with an embodiment of the present principles.

FIG. 16 is a graphical representation of a numerical global view in accordance with an embodiment of the present principles.

FIG. 17 is a graphical representation of a numerical logline filter view in accordance with an embodiment of the present principles.

FIG. 18 is a graphical representation of placement polygons for three to eight elements in accordance with an embodiment of the present principles.

FIG. 19 is an example of s system that compares elements in accordance with an embodiment of the present principles.

FIG. 20 is an example method of representing comparison information in accordance with an embodiment of the present principles.


DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

Previously, when editing multiple documents related to the same story, there was no means to ensure that the story remained consistent. This is the case for a single editor but is even more critical when the documents are edited collaboratively, by multiple different authors. The present techniques solve these problems by providing writers indicators that inform them if the document is consistent with the other documents of the story, allowing early detection of inconsistencies between redactions of different authors and indicating which document(s) must be updated to recover consistency. Documents concerning the same story creation project are collected, analyzed and returned to the authors with indicators showing a level of consistency. This allows the authors to quickly identify the parts of the story that are tagged as inconsistent and to rework them. The consistency analysis results are given by a graphic that shows the different consistency problems regardless of the number of documents taken into account. The techniques described herein are also applicable to other forms or elements besides textual documents and storylines. For illustrative purposes, story writing and consistency information are used in the examples that follow.

The general objective of screenwriting tools is to help a writer to generate the script, a document (generally around 150 pages) that details the actions and dialogs of the different characters in each scene. The writer has to define the main concepts of the story (e.g., locations, characters, etc.) as well as the interactions between them. It is a lengthy creative task that requires many iterations. In the past, everything was done on paper in a manual, tedious fashion. Today, screenwriting tools can assist in the digital domain and are helping the writers in this difficult task. One way to help make documents consistent is the successive creation of multiple texts about the story, at different levels of details and different lengths. For the sake of homogeneity, these texts are hereafter called "documents," even the smallest ones. The objectives of these documents are similar: defining what the story is about by describing the main characters, the setting, the events, the tension between the characters, etc., depending on the length of the document itself. Nothing is standardized and many variations in number of documents, size and content of those documents are possible.

Below is a general example of a storyline that illustrates different documents associated with that storyline (and illustrates storyline terminology):

• Title: a few words
  E.T. the extraterrestrial

• Logline: a very short text, typically a single sentence or two

An alienated boy bonds with an extraterrestrial child who's been stranded on earth; the boy defies the adults to help the alien contact his mothership so he can go home.

- Summary: a few sentences or paragraphs

While visiting the Earth at Night, a group of alien botanists is discovered and disturbed by an approaching human task force. Because of the more than hasty take-off, one of the visitors is left behind. The little alien finds himself all alone on a very strange planet. Fortunately, the extra-terrestrial soon finds a friend and emotional companion in 10-year-old Elliot, who discovered him looking for food in his family's garden shed. While E.T. slowly gets acquainted with Elliot's brother Michael, his sister Gertie as well as with Earth customs, members of the task force work day and night to track down the whereabouts of Earth's first visitor from Outer Space. The wish to go home again is strong in E.T., and after being able to communicate with Elliot and the others, E.T. starts building an improvised device to send a message home for his folks to come and pick him up. But before long, E.T. gets seriously sick, and because of his special connection to Elliot, the young boy suffers, too. The situation gets critical when the task force finally intervenes. By then, all help may already be too late, and there's no alien spaceship in sight.

- Synopsis: a dozen of paragraphs, potentially a couple of pages
see, for example, web reference link:
**http://www.imdb.com/title/tt0083866/synopsis?ref_=ttpl_sa_2**

- Treatment: a longer document, with dozens of pages describing the actions but no dialog

- Script/Screenplay: the ultimate document with one page per scene, so around 100 to 200 pages for a full feature movie. It includes the dialogs.
see, for example, web reference link:
**http://www.imsdb.com/scripts/E.T..html**

As can be seen by the above examples, as the documents become longer and longer, it becomes harder and more time consuming to verify consistency between the documents. And even harder still to determine trend information from the inconsistencies to help prevent future problems from occurring. To solve these issues, the following techniques are employed to generate a graphical representation of the inconsistencies between the documents. The representations easily communicate where the inconsistencies exist and also to what level (e.g., severity and/or number, etc.).

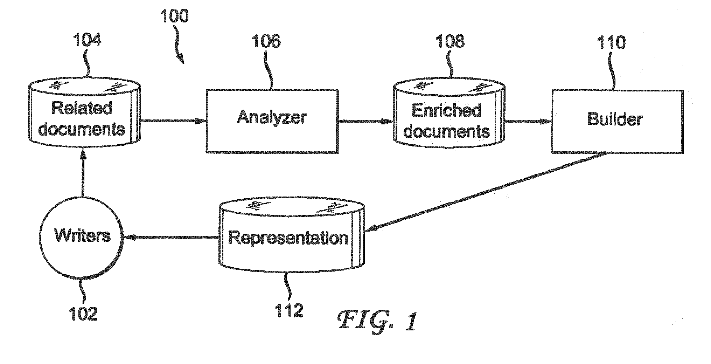

As shown in FIG. 1, a story consistency checking flow 100 starts with writers 102 contributing related documents 104 associated with a storyline. An analyzer 106 then analyzes the related documents 104 for inconsistencies and provides enriched documents 108 that contain inconsistency information. A builder 110 then takes the enriched documents 108 and constructs the inconsistency information into representation 112 that can indicate both where, what and to what level the inconsistencies exist in the related documents 104. The representation 112 allows a user such as an editor or writers 102 to easily ascertain the inconsistency information for a single document and/or for multiple documents. The representation 112 easily relays information such as level and/or location, etc. of the inconsistencies. The representation 112 can be constructed on a real-time basis, providing editors/users with instant feedback. More details related to the flow components are described in the example below.

Collect documents

In most cases, documents are not available within a single tool but present in different locations. It is therefore necessary to gather them to check their consistency. In some cases, the documents are available directly through a common management tool and, therefore, collecting the documents is no longer required and the consistency check can be computed in real time. Real-time consistency checking allows errors to be quickly corrected before they propagate throughout a document, saving time and aggravation.

Consistency ratios

The techniques for determining consistency can vary and is not critical to the graphical representation of the consistency check. The result of the determination is typically a floating value between 0.0 and 1.0, indicating no consistency and perfect consistency of a storyline element, respectively. In the case where a determination is not possible between two elements of a document, the result of the consistency can be set to a special value, for example, -1 (to indicate that a determination cannot be made).

A simple example of a technique is to determine the presence of words in each document and compare. With two texts, take the size of the two texts, after determining the number of common words in these two texts, and divide it by the size of the smallest text size. This division aims to give more importance to the words of the smallest text.

$$T_1 = set\,(m_i), T_2 = set\,(m_j),$$
$$C\,(T_1, T_2) = \frac{|T_1 \cap T_2|}{\min(|T_1|,|T_2|)}$$

This technique is very simple but the results are very good when at least one text is small. The main problem with this formula is due to the direct uses of the words present in the text. Typically, a word in singular in one text and in plural in the other text will not be taken into the determination. To counter this effect, it is possible to use part-of-speech tagging (POST). This method associates the normal form of the word to a simplified form and categorizes them as nouns, verbs, adjectives, adverbs, etc.

$$T_1 = POST\,(set\,(m_i)), T_2 = POST\,(set\,(m_j)),$$
$$C\,(T_1, T_2) = \frac{\|T_1 \cap T_2\|}{\min(|T_1|,|T_2|)}$$

It allows matching of verbs that were not conjugated in the same tenses, matching of names one time in plural and one time in singular, matching of adjectives with different genres, etc. This formula does not take into account the categorization of words produced by POST algorithms. Indeed, all categories of words are not necessarily very relevant for this type of computation. Conventionally, in a text, it is possible to limit, without much loss of relevance, to nouns, verbs and adjectives.

$$T_1 = \left[POST\,(set\,(m_i))\right]_{(noun|verb|adjective)}, T_2 = \left[POST\,(set\,(m_j))\right]_{(noun|verb|adjective)}$$
$$C\,(T_1, T_2) = \frac{\|T_1 \cap T_2\|}{\min(|T_1|,|T_2|)}$$

The limitation to these three main categories allows good results for longer and more constructed texts. But, some words (such as 'have' and 'be') have too much importance. To avoid this, it is possible to eliminate the most common words in each of these categories. It can, for example, be limited to the 25 most frequent words, etc.
All of these types of formulas work regardless of the type of text and language. In some specific cases, it can be advantageous to determine new formulas that take into account the specificities of the texts, such as language or technique.

Experimental results

The tables below illustrate using the above techniques on an example movie storyline "Jurassic Park." In this example, information about the treatment is not available, therefore, the principle is not applicable to those elements. They are identified as N/A in the tables below.

**TABLE 1:** Computation version 1 (Basic)

|  | Title | Logline | Summary | Synopsis | Treatment | Script |
|---|---|---|---|---|---|---|
| Title |  | 100% | 50% | 50% | N/A | 100% |
| Logline | 100% |  | 48.97% | 57.14% | N/A | 63.26% |
| Summary | 50% | 48.97% |  | 58.47% | N/A | 61.86% |
| Synopsis | 50% | 57.14% | 58.47% |  | N/A | 48.45% |
| Treatment | N/A | N/A | N/A | N/A |  | N/A |
| Script | 100% | 63.26% | 61.86% | 48.45% | N/A |  |

**TABLE 2:** Computation version 2 (POST)

|  | Title | Logline | Summary | Synopsis | Treatment | Script |
|---|---|---|---|---|---|---|
| Title |  | 100% | 50% | 50% | N/A | 100% |
| Logline | 100% |  | 54.41% | 60.29% | N/A | 77.94% |
| Summary | 50% | 54.41% |  | 68.79% | N/A | 71.63% |
| Synopsis | 50% | 60.29% | 68.79 |  | N/A | 59.63% |
| Treatment | N/A | N/A | N/A | N/A |  | N/A |
| Script | 100% | 77.94% | 71.63% | 59.63 % | N/A |  |

**TABLE 3:** Computation version 3 (POST limited to nouns, verbs and adjectives)

|  | Title | Logline | Summary | Synopsis | Treatment | Script |
|---|---|---|---|---|---|---|
| Title |  | 100% | 50% | 50% | N/A | 100% |
| Logline | 100% |  | 45% | 47.5% | N/A | 62.5% |
| Summary | 50% | 45% |  | 60.60% | N/A | 64.64% |
| Synopsis | 50% | 47.5% | 60.60% |  | N/A | 53.94% |
| Treatment | N/A | N/A | N/A | N/A |  | N/A |
| Script | 100% | 62.5% | 64.64% | 53.94% | N/A |  |

**TABLE 4:** Computation version 4 (POST limited to nouns, verbs and adjectives without common words)

|  | Title | Logline | Summary | Synopsis | Treatment | Script |
|---|---|---|---|---|---|---|
| Title |  | 100% | 50% | 50% | N/A | 100% |
| Logline | 100% |  | 44.44% | 47.22% | N/A | 58.33% |
| Summary | 50% | 44.44% |  | 57.30% | N/A | 60.67% |
| Synopsis | 50% | 47,22% | 57,30% |  | N/A | 51,21% |
| Treatment | N/A | N/A | N/A | N/A |  | N/A |
| Script | 100% | 58.33% | 60,67% | 51.21% | N/A |  |

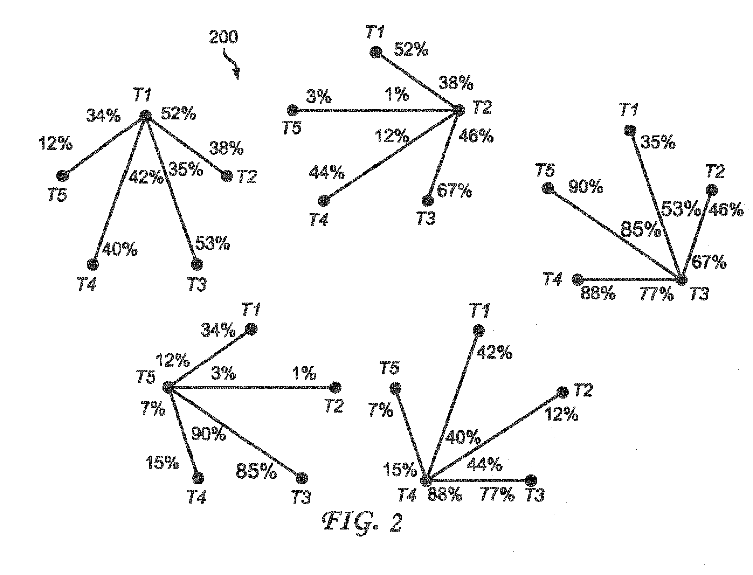

The consistency determination might not be symmetrical, and can depend on the references chosen. As a result, performing the checks, for example, on a set of five documents can lead to 5 x 2 x 5 determinations and therefore 50 consistency values between the five texts, T1 to T5, as illustrated in FIG. 2. With this kind of representation, it is very difficult for a user to understand easily the consistency results. It is a challenge to represent these numbers in a way that facilitates the reading in an easily understandable form.

Graphical rendering

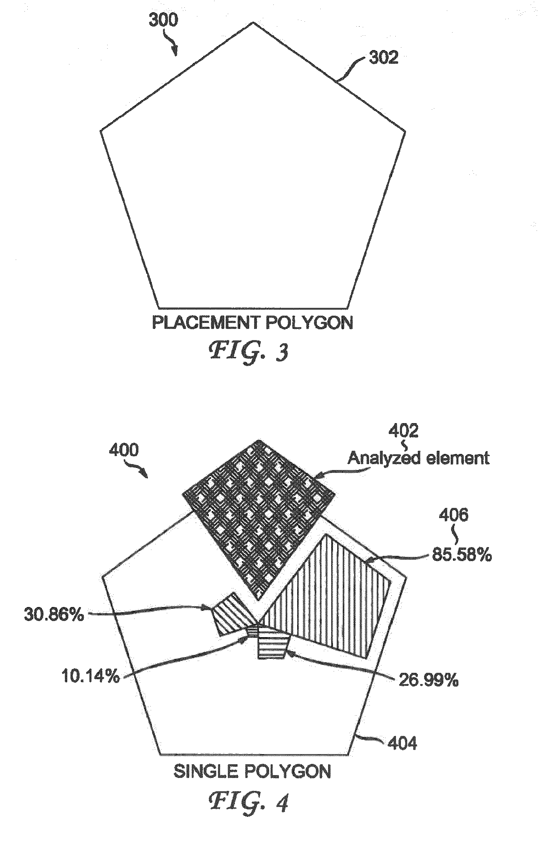

Here the problem is to determine a generic graphical representation that will allow the user to quickly know where the consistency issues are located and to what extent. To do this, a representation is based on the use of polygons. For ease of understanding, aesthetic and computational reasons, it is restricted to regular convex polygons. The number of vertex of the polygon is determined by the number of compared texts or documents (or other elements, etc.). For ease of explanation of an example scenario, the document number is limited to five. However, the techniques utilized are applicable to any number of documents/elements.
The determination is accomplished in two stages: one draws the placement figure (e.g., a placement polygon used to place the consistency polygons) and then for each storyline element, draws its schema of consistency (e.g., consistency polygon). In the example 300 of FIG. 3, the placement figure 302 is a pentagon. By convention, drawing the polygon starts with a vertex in 270 °, but any departure is possible. In the following, the placement figure is continued to be shown, but it is obvious that it is possible to hide it since only the position of the vertices is important for the next step.

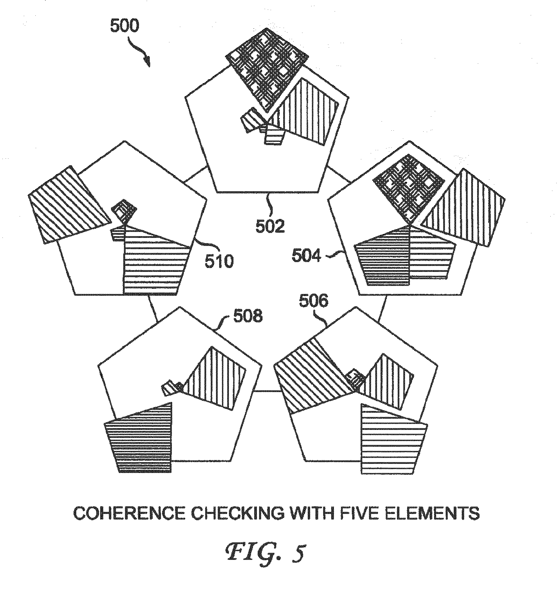

As illustrated in the example 400 of FIG. 4, for each element 402 checked for consistency, the same shape is used for both the consistency polygon 404 and the placement polygon 302 in FIG. 3. In FIGs. 3 and 4 the shape is a pentagon drawn with the same starting point, here 270 °. As stated previously, each checked element 402 is associated with a vertex of the polygon (i.e., placement figure 404). This is true for both placement polygons and for consistency polygons. The same element can retain its position to facilitate the recognition and visual analysis. For further illustrations, the first element placed is attached to the starting position. The polygon is divided into equal parts whose number is the number of elements. Each part is defined by a polygon through the center of the shape, the center of the segment of the reference element with the previous one, the vertex of the element and the center of the segment of the reference element and the next one. To strengthen the visual aid, the portion corresponding to the element can be slightly deviated from its initial position. To fill these areas, a different color or shading per element can be used to increase the understanding of the figure. A consistency value 406 between a reference element and the other is used to determine a degree of filling of each portion. In the example 500 shown in FIG. 5, a polygon (502-508) is drawn for each element and each of these polygons is centered on the vertex corresponding to the element on the placement polygon.

Optional variations

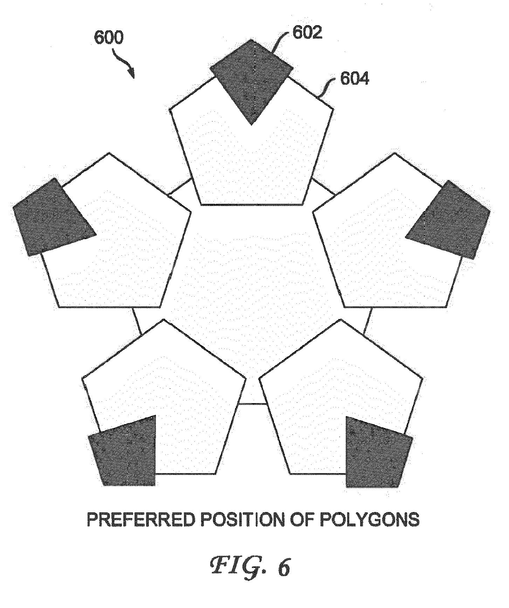

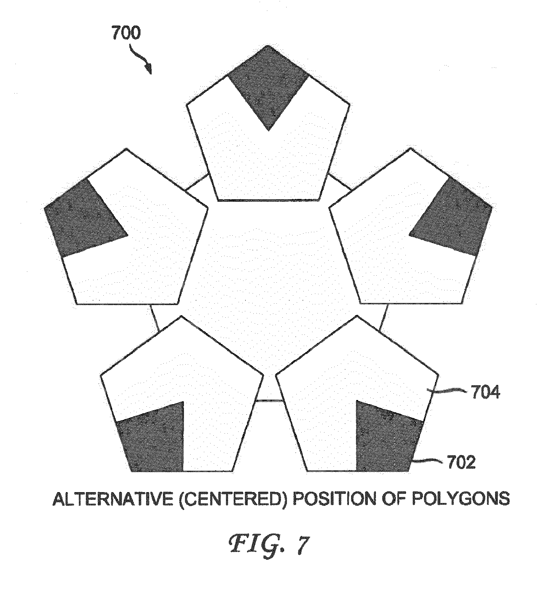

Option "A" - A portion 602 corresponding to the analyzed element can be offset as depicted in the example 600 of FIG. 6 compared to its initial position in a consistency polygon 604 for easier understanding and differentiation between the element that is analyzed and perfectly matching element. The example 700 of FIG. 7 shows a portion 702 of an analyzed element within a placement polygon704.

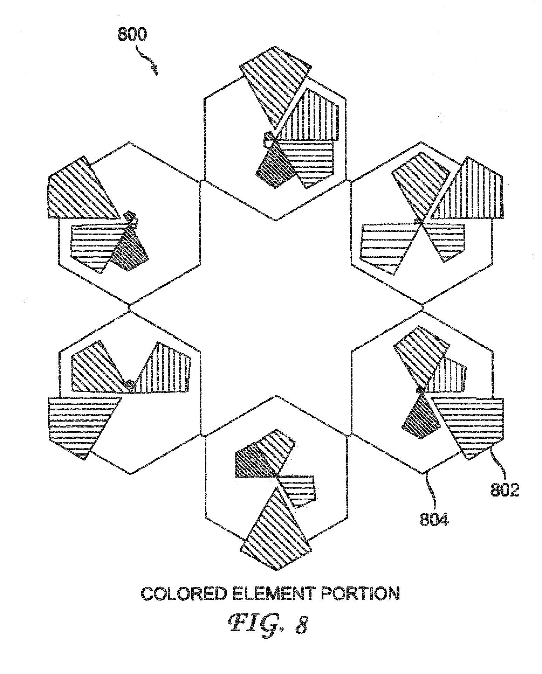

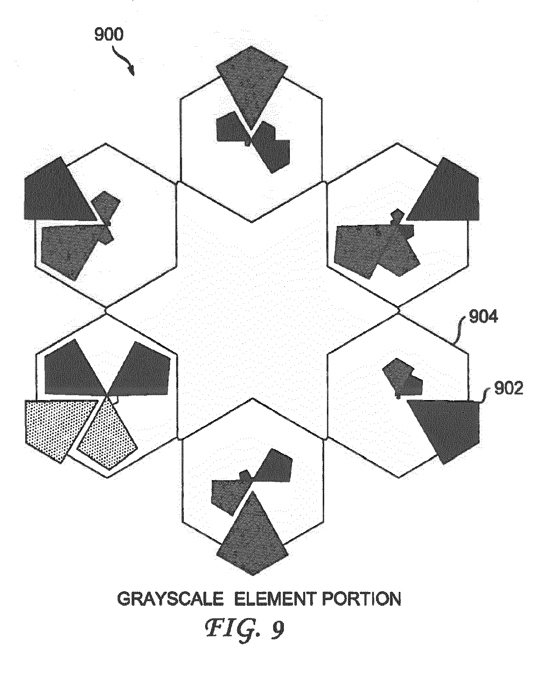

Option "B" - It is possible to use grayscale instead of color. In the example 800 of FIG. 8, an element portion 802 of a consistency polygon 804 is colored. In the example 900 of FIG. 9, an element portion 902 of a consistency polygon 904 is grayscale.

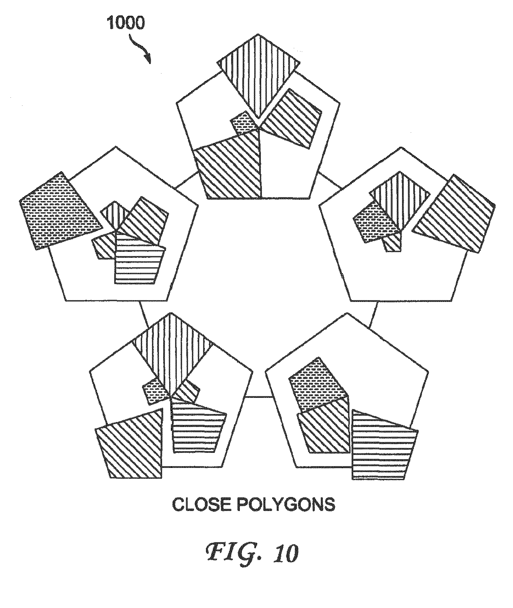

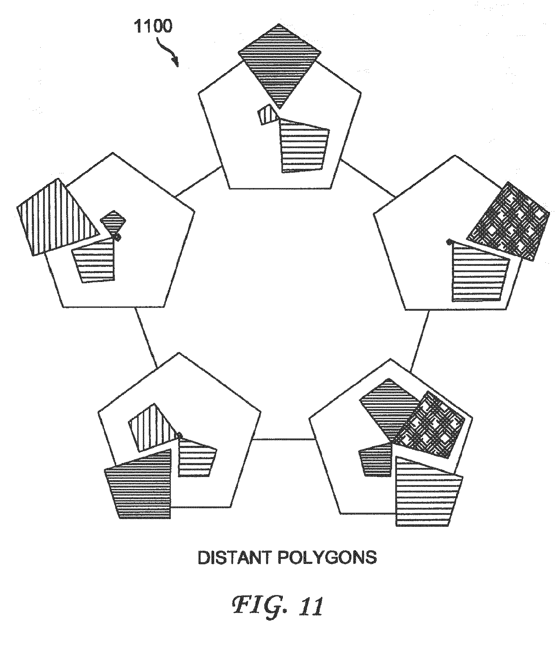

Option "C" - As shown in the example 1000 and example 1100 of FIGs. 10 and 11, respectively, even if the placement polygon and the consistency polygon must be the same, it is possible to change the size ratio to hold off or to bring closer depending of the needs.

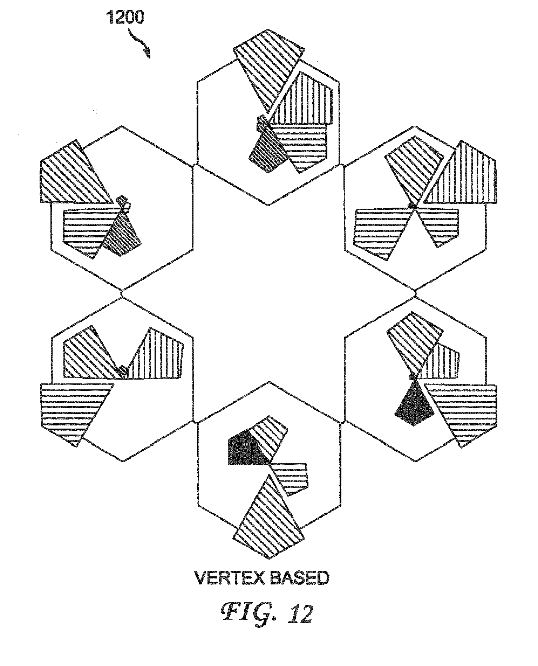

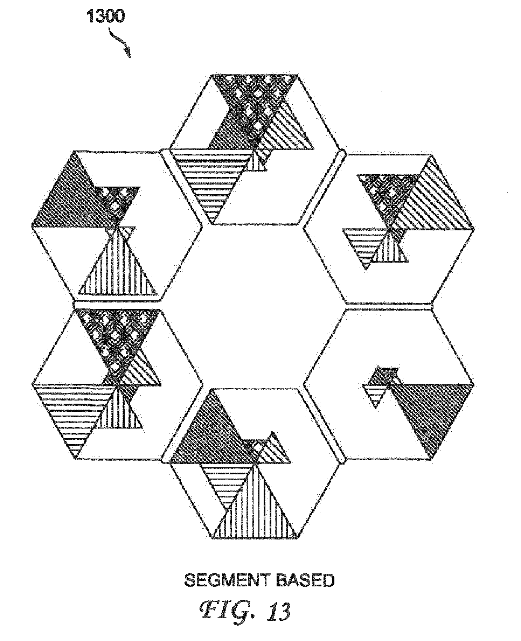

Option "D" - In the case where the number of elements is even, it is possible to make a positioning and therefore a new cutting to allow a more compact placement. In this case, an element is not associated with a vertex but with a center of a segment connecting two vertices. The starting point is 0 ° and not 270 ° and parts are defined by the center and the two vertices flanking the point of an element. This positioning is optimized for a small number of polygon. The example 1200 of FIG. 12 depicts a vertex based graphical representation and the example 1300 of FIG. 13 depicts a segment based graphical representation.

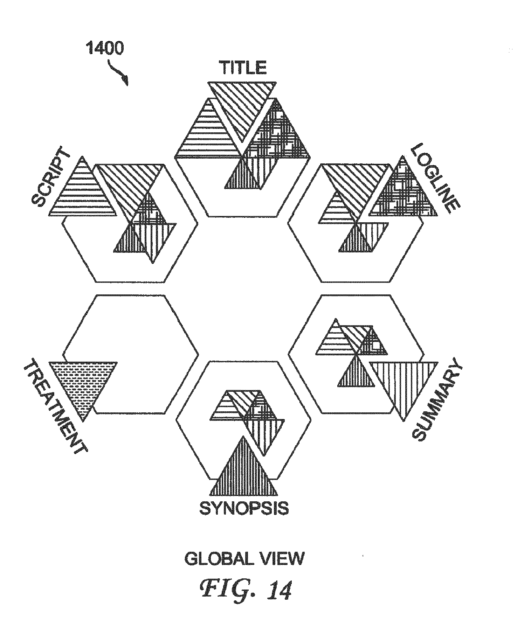

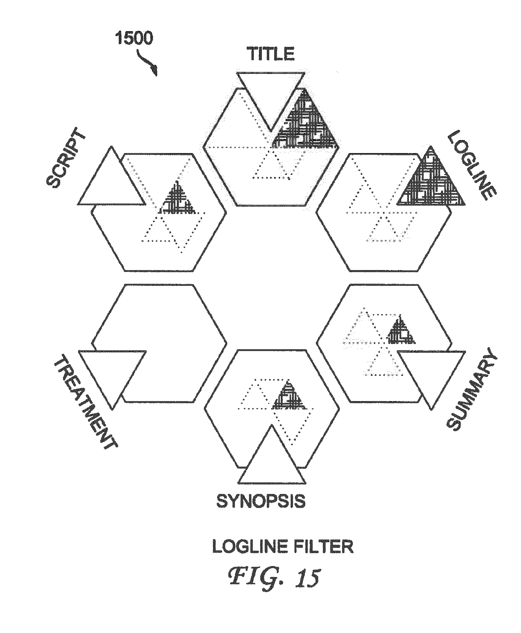

Option "E" - In the case where there are many elements, it is possible to apply a filter to see only a relationship of a particular element with all others. The examples 1400 and 1500 of FIGs. 14 and 15, respectively illustrate a before and after example where a user has selected a filter to show a logline element. Filtered elements can be partially or completely hidden from view. Selected, analyzed elements (non-filtered elements) can be highlighted to help further differentiate them from other elements. The illustrations show segment based diagrams but can also apply to vertex based diagrams.

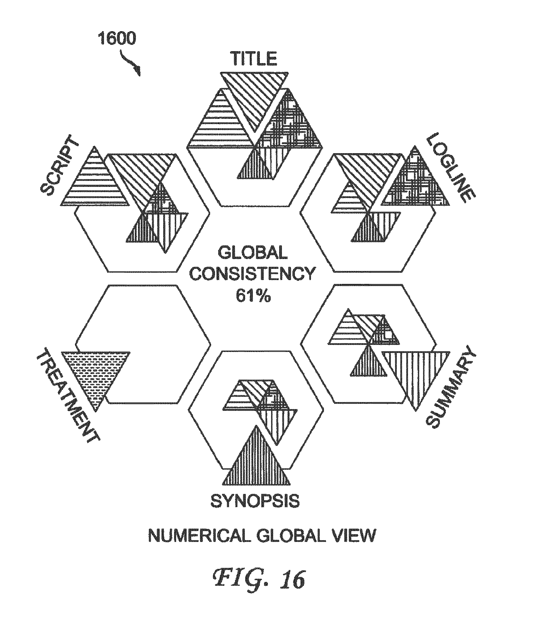

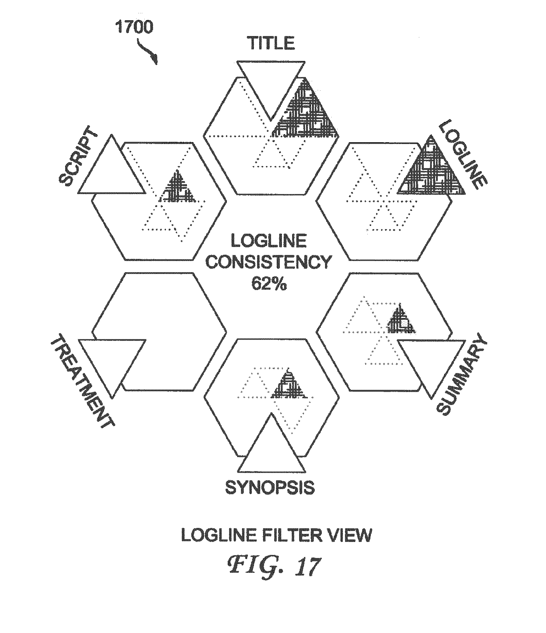

Option "F" - The examples 1600 and 1700 of FIGs. 16 and 17 illustrate assisting users with a simple view. Numeric information relating to the consistency is displayed on the graphical representation. This numeric value can be a simple average of consistency and/or by weighting it with the size of each item or based on words that were used in the calculation. As noted above, filtered elements can be partially or completely hidden from view while selected, analyzed elements can be highlighted to help differentiate them from other elements. The illustrations show segment based diagram but it can also apply to vertex based diagrams.

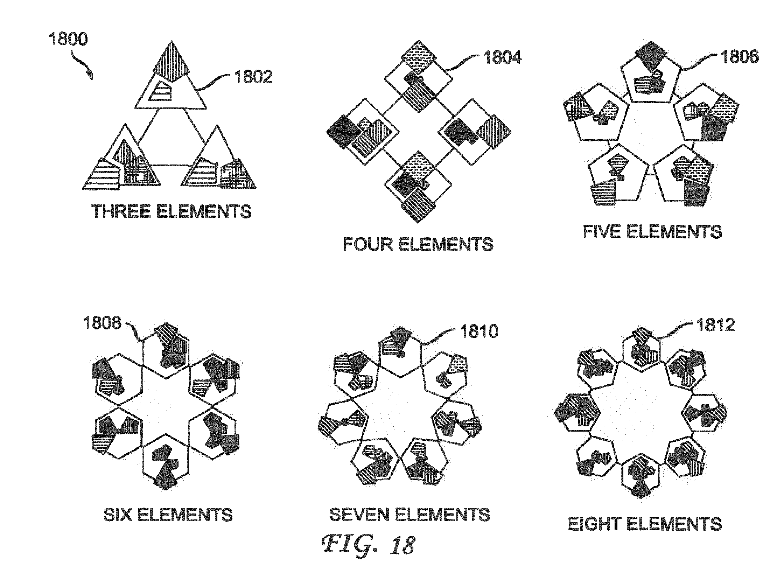

Option "G" - Example 1800 of FIG. 18 depicts different polygons based on a number of elements represented graphically, namely examples of representation from three to eight elements, 1802-1812, respectively. This shows the versatility of the graphical representation and its ability to represent a multitude of elements.

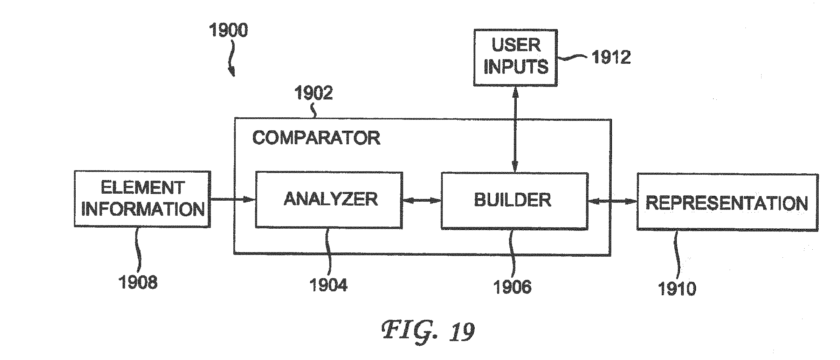

These different types of representations described above can be generated by a system 1900 such as that shown in FIG. 19. The system 1900 includes a comparator 1902 comprising an analyzer 1904 and a builder 1906. Element information 1908 relating to elements to be compared is received by the analyzer 1904 and processed to determine the number of elements analyzed and comparison information between the elements for a given element or elements. Once analyzed, the element information (e.g., number of elements, comparison information) is forwarded to a builder 1906 that builds the element information into a visual representation or graph 1910. The builder 1906 uses the number of processed elements to determine how many vertices of a convex polygon are needed to represent each element. The builder 1906 can also use the number of processed elements to determine how many segments of a convex polygon are needed to represent each element.

The polygon constructed by the builder 1906 based on the number of processed elements represents a placement polygon that is used to place or organize comparison polygons (e.g., consistency polygons). The comparison polygons typically fill a portion of the placement polygon associated with a particular element. These comparison polygons represent comparison information (e.g., a level of consistency) of an element between other elements. They are placed by the builder 1906 at or near a portion of the placement polygon assigned to that particular element. The comparison polygons can be placed within the placement polygon or in proximity to a vertex or segment. This allows the comparison polygons to be offset, etc. to enable better visual effects, making the element comparison information easier to comprehend. Likewise, color, grayscale, and/or three-dimensional effects can be employed.

The builder 1906 can also change its output representation 1910 based upon a user input 1912. A user can apply different filters to affect the visual representation 1910, highlighting some documents while diminishing others, etc. For example, a user can isolate one element in particular to more clearly see its comparison with other elements. A user can also select which elements to compare or not to compare. A user can also decide which colors represent what elements and/or which colors represent the comparison (e.g., a certain level of consistency - red indicates poor consistency, yellow indicates borderline consistency, green indicates good consistency, etc.). A user can also select particular color schemes and/or grayscale indicators for comparison polygons. User input can also be utilized to hide the placement polygon to clean up the output representation 1910. One skilled in the art can appreciate that other types of user input can be used to influence the representation 1910 (e.g., limiting elements, scaling larger or smaller, etc.).

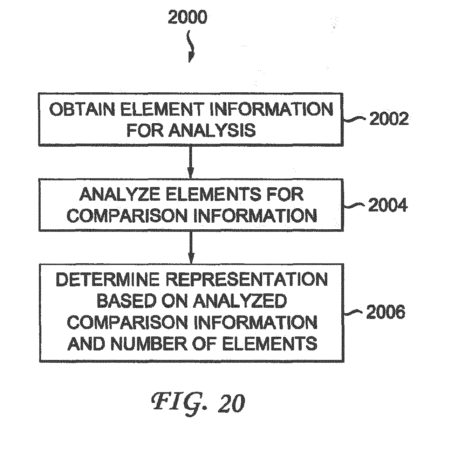

In view of the exemplary systems shown and described above, methodologies that can be implemented in accordance with the embodiments will be better appreciated with reference to the flow chart of FIG. 20. While, for purposes of simplicity of explanation, the methodologies are shown and described as a series of blocks, it is to be understood and appreciated that the embodiments are not limited by the order of the blocks, as some blocks can, in accordance with an embodiment, occur in different orders and/or concurrently with other blocks from that shown and described herein. Moreover, not all illustrated blocks may be required to implement the methodologies in accordance with the embodiments.

FIG. 20 is a flow diagram of a method 2000 of representing comparison information between elements. The method 2000 begins by obtaining element information for analysis 2002. This is not limited to, but can include, electronically located data sets from a single or multiple sources. In some situations, a user can be asked to submit element information from different sources not co-located. Once the element information is obtained, it is analyzed to determine comparison information 2004. The specific means utilized to determine the comparison information is not dictated by the constructed representation (the representation is independent of the analysis methods). Typical means have been described above and can yield comparison information such as, for example, a consistency ratio between 0.0 and 1.0 which can also be represented as a percentage. If a comparison is not possible between elements, a value, for example, of -1.0 can be returned to indicate that the elements cannot be compared.

The comparison analysis and number of elements is then utilized to determine a representation of the comparison between elements 2006. A polygon is used as a placement figure for placing further polygons that represent comparisons of an element. The number of vertices or segments is determined by the number of elements being compared. Once the placement figure is established, smaller polygons or "comparison polygons" are used to represent comparison information of an element compared to another element. It is also possible to use the placement polygons for placement of comparison polygons but not have the placement polygons visible to a user of the interface. This can facilitate in relaying comparison information to a user. Likewise, the use of different colors of comparison polygons can be used to represent different elements. This allows the user to easily relate comparison values with a specific element. Numeric information can also be shown on the representations to aid in conveying information.

The comparison polygons can also be offset from the placement polygon for effect and/or displayed within the placement polygon. Elements can be represented by the vertices or segments of the placement polygon. Filters can also be applied to the representation. For example, a user can filter the representation based on a specific element so that it is easier to interpret. The filtering can be accomplished by leaving a selected element in color and using grayscale on the other documents and/or bringing certain elements associated with the selection forward in a three dimensional effect to aid with conveying the information as well.

The systems and methods described above can be applied to other sets of data besides textual types of information and is not limited by the textual illustrations given above. For example, it can also be applied to musical compositions with the comparison determinations based on the notes and scales used.

What has been described above includes examples of the embodiments. It is, of course, not possible to describe every conceivable combination of components or methodologies for purposes of describing the embodiments, but one of ordinary skill in the art can recognize that many further combinations and permutations of the embodiments are possible. Accordingly, the subject matter is intended to embrace all such alterations, modifications and variations that fall within scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1.  A system that builds a comparison of a group of elements, comprising:

    an analyzer that compares an element with a set of other elements and creates comparison information; and
    a builder that builds a representation of the comparison information by assigning a portion of a polygon to each of the elements in the group and placing an indicator for the comparison information between each of the elements at or near the portion assigned to a given element.

2.  The system of claim 1, wherein the analyzer determines a level of consistency having a value from 0.0 to 1.0.

3.  The system of claim 2, wherein the analyzer sets a value of the level of consistency to indicate when a level of consistency cannot be determined.

4.  The system of claim 1, wherein the builder applies a graphical filter to the representation.

5.  The system of claim 1, wherein the builder accepts a user input.

6.  The system of claim 5, wherein the user input includes one of a color selection, a grayscale selection and an element selection.

7.  The system of claim 1 operates in real time as an associated element changes.

8.  A method for building a representation of comparison information between elements, comprising:

    analyzing at least two elements to determine comparison information; and
    building a representation of the comparison information based on a number of analyzed elements and the determined comparison information.

9.  The method of claim 8, further comprising:

    assigning each element to a portion of a polygon;
    creating at least one indicator representing the comparison information; and
    placing the at least one indicator in proximity of the portion of the polygon assigned to an element associated with the comparison information represented by the at least one indicator.

10. The method of claim 9, further comprising:

    assigning a color to each indicator to show its association with an element.

11. The method of claim 9, further comprising:

    offsetting an indicator to distinguish it from other indicators.

12. The method of claim 9, further comprising:

    determining comparison information with a value between 0.0 and 1.0.

13. A system that builds a representation of comparison information, comprising:

    means for analyzing at least two elements to determine comparison information; and
    means for creating a polygon, the polygon having a number of sides based on a number of analyzed elements;
    means for assigning an element to a portion of the polygon; and
    means for representing the determined comparison information with an indicator placed on the polygon at or near a portion associated with an element.

*FIG. 1*

FIG. 2

EP 3 001 370 A1

300

302

PLACEMENT POLYGON

FIG. 3

402
Analyzed element

400

406
85.58%

30.86%

10.14%

26.99%

404

SINGLE POLYGON

FIG. 4

COHERENCE CHECKING WITH FIVE ELEMENTS

*FIG. 5*

PREFERRED POSITION OF POLYGONS

FIG. 6

700

704

702

ALTERNATIVE (CENTERED) POSITION OF POLYGONS

FIG. 7

EP 3 001 370 A1

COLORED ELEMENT PORTION

FIG. 8

16

GRAYSCALE ELEMENT PORTION

*FIG. 9*

1000

CLOSE POLYGONS

*FIG. 10*

1100

DISTANT POLYGONS

*FIG. 11*

1200

VERTEX BASED

*FIG. 12*

1300

SEGMENT BASED

*FIG. 13*

1400

TITLE

SCRIPT

LOGLINE

TREATMENT

SYNOPSIS

SUMMARY

GLOBAL VIEW

FIG. 14

LOGLINE FILTER

*FIG. 15*

1600

TITLE

SCRIPT

LOGLINE

GLOBAL
CONSISTENCY
61%

TREATMENT

SUMMARY

SYNOPSIS

NUMERICAL GLOBAL VIEW

FIG. 16

LOGLINE FILTER VIEW

FIG. 17

THREE ELEMENTS

FOUR ELEMENTS

FIVE ELEMENTS

SIX ELEMENTS

SEVEN ELEMENTS

EIGHT ELEMENTS

FIG. 18

*FIG. 19*

2000

```
┌──────────────────────────────────┐
│  OBTAIN ELEMENT INFORMATION      │──~ 2002
│         FOR ANALYSIS             │
└──────────────────────────────────┘
                 │
                 ▼
┌──────────────────────────────────┐
│      ANALYZE ELEMENTS FOR        │──~ 2004
│    COMPARISON INFORMATION        │
└──────────────────────────────────┘
                 │
                 ▼
┌──────────────────────────────────┐
│   DETERMINE REPRESENTATION       │
│       BASED ON ANALYZED          │──~ 2006
│   COMPARISON INFORMATION         │
│    AND NUMBER OF ELEMENTS        │
└──────────────────────────────────┘
```

*FIG. 20*

Europäisches
Patentamt

European
Patent Office

Office européen
des brevets

# EUROPEAN SEARCH REPORT

**Application Number**

EP 14 30 6512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/075729 A2 (MORNINGSIDE ANALYTICS LLC [US]; KELLY JOHN W [US]) 23 June 2011 (2011-06-23) * paragraph [0019] * * paragraph [0024] * * abstract; figures 9,10 * * paragraph [0048] * * paragraph [0060] * * paragraph [0072] - paragraph [0078] * * paragraph [0087] - paragraph [0088] * | 1-13 | INV. G06Q10/10 G06F17/27 |
| X | WO 2011/126489 A1 (HEWLETT PACKARD DEVELOPMENT CO [US]; HICKEY MARIANNE [GB]; TRASTOUR DA) 13 October 2011 (2011-10-13) * figures 2-3e * | 1-13 | |
| A | US 6 665 863 B1 (LORD ROBERT WILLIAM [US] ET AL) 16 December 2003 (2003-12-16) * the whole document * | 1-13 | |
| A | US 2013/254158 A1 (MORELLI PAULO [BR]) 26 September 2013 (2013-09-26) * the whole document * | 1-13 | TECHNICAL FIELDS SEARCHED (IPC) G06Q G06F |

The present search report has been drawn up for all claims

| Place of search | Date of completion of the search | Examiner |
|---|---|---|
| Munich | 5 December 2014 | Gardiner, Alexander |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 14 30 6512

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2014

| Patent document cited in search report | | Publication date | Patent family member(s) | | Publication date |
|---|---|---|---|---|---|
| WO 2011075729 | A2 | 23-06-2011 | AU | 2010330720 A1 | 26-07-2012 |
| | | | EP | 2537106 A2 | 26-12-2012 |
| | | | US | 2011173264 A1 | 14-07-2011 |
| | | | US | 2014101557 A1 | 10-04-2014 |
| | | | WO | 2011075729 A2 | 23-06-2011 |
| WO 2011126489 | A1 | 13-10-2011 | EP | 2556445 A1 | 13-02-2013 |
| | | | US | 2013073533 A1 | 21-03-2013 |
| | | | WO | 2011126489 A1 | 13-10-2011 |
| US 6665863 | B1 | 16-12-2003 | US | 6665863 B1 | 16-12-2003 |
| | | | US | 2004080549 A1 | 29-04-2004 |
| | | | US | 2005151738 A1 | 14-07-2005 |
| US 2013254158 | A1 | 26-09-2013 | NONE | | |

EPO FORM P0459

For more details about this annex : see Official Journal of the European Patent Office, No. 12/82